# EUROPEAN PATENT APPLICATION

(11) **EP 4 389 471 A1**
(43) Date of publication of application: **26.06.2024**
(21) Application number: 22215740.6
(22) Date of filing: 22.12.2022
(51) Int. Cl.: B60G 11/26, B60G 15/06, B60G 21/067, B60G 21/073, B60G 21/08, F04B 1/16, F04B 9/02, F04B 11/00

(54) **SYRINGE PUMP WITH MULTI CIRCUIT CAPABILITIES**

(71) Applicant: Öhlins Racing AB, 194 27 Upplands Väsby (SE); DRiV Automotive Inc., Northville, MI 48168 (US)
(72) Inventor: BOON, Peter, Northville, MI 48168 (US); SLOOTMAEKERS, Steen, Northville, MI 48168 (US)
(74) Representative: AWA Sweden AB

(57) **Abstract**

A system 201, 202, 300, 400, 500 for use in a vehicle to control movement of a vehicle body relative to each wheel of the vehicle. The system comprising at least two hydraulic damper assemblies 210, 211, 310, 311, 410, 411, 510, 511 or shock absorbers, each configured to connect the vehicle body to a respective wheel of the vehicle. The system further comprises at least one hydraulic actuator 100, 225, 325, 425, 525 configured to be in fluid communication with at least two of the hydraulic damper assemblies. The at least one hydraulic actuator comprises at least two fluid chambers 150, 154, each comprising an aperture 157, 158 at a first end thereof, and at least two actuator pistons 140, 144, each slidable within respective fluid chambers in a first direction, D1, thereof for moving hydraulic fluid into the fluid chamber via the aperture and in a second direction, D2, for moving hydraulic fluid out of the fluid chamber via the aperture. Further, each of the at least one actuator pistons is operatively connected to a drive unit 110, 228, the drive unit being configured to generate a translation of the at least one actuator pistons in the first and second direction. Still further, the at least one hydraulic actuator is configured to adjust a preload of the at least two hydraulic damper assemblies to control at least one of a pitching movement of the vehicle body relative to the wheels of the vehicle; and a rolling movement of the vehicle body relative to the wheels of the vehicle.

## Description

### TECHNICAL FIELD

The present disclosure generally relates to the field of vehicle shock absorbers. More particularly, the present disclosure relates to a system of use in a vehicle to control movement of a vehicle body relative to one or more wheel of the vehicle.

### TECHNICAL BACKGROUND

Shock absorbers are widely used within vehicles and are designed to absorb and damp shock impulses thereby improving vehicle maneuverability and the overall driving of the vehicle. Particularly, there is a growing interest in vehicle body movement compensation systems enabling the control of the movement of a vehicle body relative to the wheels of the vehicle during driving. Such systems generally interact with the shock absorbers of the vehicle by increasing and decreasing hydraulic pressure in specific shock absorbers to adjust the position of the vehicle body relative the wheels during driving.

Solutions of stabilization systems commonly seen in today's vehicles utilize a hydraulic fluid circuit including a reservoir tank for storing hydraulic fluid and a fluid pump for drawing hydraulic fluid from the reservoir tank and delivering it to the shock absorbers. Generally, the stabilization system further comprises a valve arrangement for distributing the hydraulic fluid to targeted shock absorbers in order to compensate for the movement of the vehicle body when the vehicle is for example subjected to turns, acceleration, and deceleration during driving.

However, reservoir tanks and fluid pumps used in common stabilization systems for vehicles increase the weight of the vehicle and generate a non-neglectable amount of noise, vibrations and harshness (NVH) when operated. Furthermore, maintenance of the level of oil in the hydraulic circuit is frequently required due to, for example, evaporation of hydraulic fluid in the reservoir tank. Still further, the movement of the damping fluid in the enclosure of the reservoir tank has an effect on the vehicle body in addition to the movement resulting from driving.

### SUMMARY

It is therefore an object of the present disclosure to try to overcome at least some of the deficiencies of current stabilizing systems, particularly regarding the use of a reservoir tank and hydraulic fluid pump in the control of the movement of a vehicle body.

This and other objects are achieved by providing a system to control movement of a vehicle body relative to each wheel of the vehicle and a method for controlling the movement of a vehicle body relative to each wheel of the vehicle having the features of the independent claims. Preferred embodiments are defined in the dependent claims.

Hence, according to a first aspect, there is provided a system for use in a vehicle to control movement of a vehicle body relative to each wheel of the vehicle. The system comprising at least two hydraulic damper assemblies, or shock absorbers, each configured to connect the vehicle body to a respective wheel of the vehicle. The system further comprises at least one hydraulic actuator, or syringe pump, configured to be in fluid communication with at least two of the hydraulic damper assemblies. The at least one hydraulic actuator comprises at least two fluid chambers, each comprising an aperture at a first end thereof, and at least two actuator pistons, each slidable within respective fluid chambers in a first direction thereof for moving hydraulic fluid into the fluid chamber via the aperture and in a second direction for moving hydraulic fluid out of the fluid chamber via the aperture. Further, each of the at least one actuator pistons is operatively connected to a drive unit, the drive unit being configured to generate a translation of the at least one actuator pistons in the first and second direction. Still further, the at least one hydraulic actuator is configured to adjust a preload of the at least two hydraulic damper assemblies to control at least one of a pitching movement of the vehicle body relative to the wheels of the vehicle; and a rolling movement of the vehicle body relative to the wheels of the vehicle.

Thus, the present disclosure is based on the idea of providing a hydraulic system for controlling at least the rolling and/or pitching movement of a vehicle body relative to the wheels which does not require the use of a separate reservoir tank for hydraulic fluid. Consequently, the present disclosure also aims to remove the need for a hydraulic fluid pump for generating the flow of hydraulic fluid between the reservoir tank and the rest of the hydraulic system. As used herein, "rolling movement" may be understood as the rotation of the vehicle body about its longitudinal axis, for example the movement of the vehicle body to the right of the vehicle during a left turn or the movement of the vehicle body to the left of the vehicle during a right turn. As used herein, "pitching movement" may be understood as the rotation of the vehicle body about its transverse axis, for example squatting of the rear of the vehicle body during acceleration or diving of the front of the vehicle when decelerating. The system of the present disclosure further stems from the idea of providing better control of the movement of the vehicle body relative to the wheels in comparison to commonly used stabilization systems. It will be appreciated that the terms "stabilization" or "stabilizing" as used herein may be understood as the effort or action resulting in the vehicle body being centered above the wheels of the vehicle. In different words, stabilizing the vehicle body is herein meant as reducing substantially any rolling movement and pitching movement of the vehicle body.

The above-stated objects of the system of the present disclosure may be attained by the provision of the at least one hydraulic actuator configured to be in fluid communication with at least two of the hydraulic damper assembly, or shock absorber. That is, the at least one hydraulic actuator may be configured to fulfil the function of a reservoir tank and of a hydraulic fluid pump used in general stabilization systems. In different words, the fluid chambers of the hydraulic actuator provide an enclosure for containing a volume of hydraulic fluid and the actuator pistons, slidable within their respective fluid chamber, enable flow of hydraulic fluid into and from the fluid chambers. The at least one hydraulic actuator therefore enables the reduction of noise and vibration related to the use of a hydraulic fluid pump and of a reservoir tank resulting in a lower noise, vibration and harshness (NVH) profile for the system of the present disclosure in comparison to generally used stabilization systems. Moreover, the at least one hydraulic actuator further enables the reduction of the weight of the system as a whole via the exclusion of the reservoir tank and hydraulic pump and reduces the risk of fluid leakage and water ingestion normally related to reservoir tanks. It will be appreciated that, for a system in which more than one hydraulic actuator are used, the volume of hydraulic fluid comprised in the system may be distributed amongst the fluid chambers of the hydraulic actuators, resulting in an improved weight distribution of the system on the vehicle.

Additionally, the fluid communication between the at least one hydraulic actuator and the at least two hydraulic damper assemblies allows for the system of the present disclosure to embody several different configurations in terms of the fluid connections between the at least one hydraulic actuator and the at least two hydraulic damper assemblies. For example, a configuration of the system may comprise two hydraulic actuators, a first hydraulic actuator fluidly connected to the hydraulic damper assemblies of the front wheels and a second hydraulic actuator fluidly connected to the hydraulic damper assemblies of the rear wheels of a vehicle. The fluid communication between the at least one hydraulic actuator and the at least two hydraulic damper assemblies therefore fulfils a function of fluid distribution amongst the hydraulic damper assemblies which in turn permits the system to be free of any valve arrangement usually required for directing hydraulic fluid to specific hydraulic damper assemblies in generally used stabilization systems. The absence of valve arrangement for distributing hydraulic fluid further reduces the weight of the system and the risks of hydraulic fluid leakage and water ingestion.

Moreover, the drive unit to which each one of the at least one hydraulic actuator is operatively connected enables integrated communication for the system of the present disclosure. That is, the drive unit may be configured to actuate the hydraulic actuator in response to a parameter output received from for example at least one of a pressure sensor, an accelerometer, or a gyroscope comprised in the system. The parameter output may for instance be a pressure, a speed, an angle of the vehicle body relative to the wheels, or any variation thereof. The parameter output may be communicated to the drive unit of the hydraulic actuator by means of a communication unit also comprised in the system. The response of the drive unit to this parameter output from the system therefore allows the communication and the actuation source of the hydraulic actuator to be integrated within the system. Hence, the system of the present disclosure is free of any external communication means, such as an electric control unit (ECU), and any external driver means, such as a hydraulic fluid pump.

The fluid communication between the at least one hydraulic actuator and the at least two hydraulic damper assemblies and the respective drive units also allows the at least one hydraulic actuator to be configured to adjust a preload of the at least two hydraulic damper assemblies to control at least one of the pitching movement of the vehicle body relative to the wheels of the vehicle and the rolling movement of the vehicle body relative to the wheels of the vehicle. As used herein, "adjust a preload" may be understood as an increase or decrease of hydraulic fluid pressure, or damping pressure, in a hydraulic damper assembly such that at least the compression damping of the hydraulic damping assembly is made firmer or softer. In different words, by increasing a preload of a hydraulic damper assembly, the required force for compressing the hydraulic damper assembly is increased. That is, the required force exerted by the vehicle body on a hydraulic damper assembly to compress said hydraulic damper assembly is controlled by the adjustment of the preload of the hydraulic damper assembly. The adjustment of the preload of the at least two hydraulic damper assemblies therefore enables the control of the movement of the vehicle body relative to wheels from which results the force exerted on the hydraulic damper assemblies. The at least one actuator can also be used to compensate for volume changes in the fluid due to temperature changes.

Additionally, and according to a second aspect of the present disclosure, there is provided a method for controlling movement of a vehicle body relative to one or more wheels of the vehicle using the system according to the first aspect. The method comprises the steps of detecting a movement of the vehicle body relative to the wheels of the vehicle, wherein the movement of the vehicle body is at least one of a pitching movement or a rolling movement and controlling a flow of damping fluid in the system to adjust the preload of the at least two hydraulic damper assemblies. Further, for a rolling movement of the vehicle body, the method comprises the step of increasing a damping pressure in at least two hydraulic damper assemblies positioned on a same side of the vehicle body by actuating at least one of the at least one hydraulic actuator. Still further, for a pitching movement of the vehicle body, the method comprises the step of increasing a damping pressure in at least two hydraulic damper assemblies positioned at the front or at the rear of the vehicle body by actuating at least one of the at least one hydraulic actuator.

The method according to the second aspect therefore allows the stabilization of the vehicle body during driving, specifically when the vehicle is turning, accelerating and/or decelerating. It will be appreciated that the aforementioned steps are performed automatically without any driver input. That is, the detection of the movement of the vehicle body relative to the wheels enables the system to identify which of the at least one hydraulic actuators is to engage in preloading specific hydraulic damper assembly or assemblies in order to compensate for the movement of the vehicle body such that stabilization is obtained. For example, should the vehicle body engage in a rolling movement to its left in the driving direction, preloading of the hydraulic damper assemblies connecting the vehicle body to the front left wheel and to the rear left wheel will be performed by the system. Should the vehicle body engage in a rolling movement to its right in the driving direction, preloading of the hydraulic damper assemblies connecting the vehicle body to the front right wheel and to the rear right wheel will be performed by the system. Similarly, should the vehicle body engage in a pitching movement to its rear, i.e. squatting during acceleration, preloading of the hydraulic damper assemblies connecting the vehicle body to the rear left wheel and to the rear right wheel will be performed by the system. Should the vehicle body engage in a pitching movement to its front, i.e. diving during deceleration, preloading of the hydraulic damper assemblies connecting the vehicle body to the front left wheel and to the front right wheel will be performed by the system. It is to be noted that other preloading schemes may be embodied by the method according to the second aspect.

According to some embodiments of the present disclosure, the drive unit may be arranged to provide power transmission via an axis of the drive unit, wherein the translation of the at least two actuator pistons is generated by the power transmission in a direction of the axis. This is advantageous in that it provides an efficient power transmission to the hydraulic actuator with minimal loss of energy. It will be appreciated that the power transmission may further be provided in a rotational direction of the axis of the drive unit, wherein the power transmission in the rotational direction generates a translation of the actuator piston in parallel with the axis

According to some embodiments of the present disclosure, the drive unit may comprise a longitudinal extension along the axis, wherein each of the at least two fluid chambers may comprise a longitudinal extension parallel to the longitudinal extension of the drive unit. The provision of the longitudinal extension of the drive unit and the longitudinal extension of the at least two fluid chambers enables a compact design of the hydraulic actuator.

According to some embodiments of the present disclosure, the at least one hydraulic actuator may comprise a lead screw operatively connected to the drive unit and extending therefrom along the axis, such that when the drive unit is operated the lead screw may be rotated, thereby transmitting power from the drive unit along the axis. The provision of the lead screw is advantageous in that it enables an efficient power transmission from the drive unit to the at least two actuator pistons. The lead screw further enables power to be transmitted, from a rotational direction around the axis into a translational direction along the axis. Using the lead screw for transmitting power is also advantageous in that it transmits power by rotational movement, without any translational movement, thereby occupying a minimal amount of space.

According to some embodiments of the present disclosure, the at least one hydraulic actuator may comprise a gear element in connection with the lead screw, wherein the gear element is engaged with the actuator piston, such that rotation of the lead screw generates a linear or a rotational motion of the gear element which, in turn, generates the translation of the actuator piston. It will be appreciated that the gear element and the lead screw may be connected by means of respective threads. It will further be appreciated that the threads of the lead screw may be obtained by means of a thread rolling manufacturing process. That is, the threads of the lead screw may be produced by compression between rotating or reciprocating dies, wherein a thread profile is ground into the dies. The thread rolling manufacturing process provides a smooth surface finish to the threads of the lead screw, resulting in a reduction of friction with the corresponding threads in contact therewith. This in turn leads to the reduction of wear and therefore the prolongation of the service life of the lead screw. Furthermore, the provision of the lead screw is advantageous in that it enables an efficient power transmission from the drive unit to the actuator pistons. The lead screw enables power to be transmitted, from a rotational direction around the axis into a translational direction along the axis. Using the lead screw for transmitting power is also advantageous in that it transmits power by rotational movement, without any translational movement, thereby occupying a minimal amount of space in the hydraulic actuator.

According to some embodiments of the present disclosure, the at least one hydraulic actuator may comprise an electric motor configured to operate the drive unit. The electric motor may be, but not limited to, a brushless DC electric motor reducing the risk of wear encountered with brush motors. The use of an electric motor enables a high power-to-weight ratio, high speed, substantially instantaneous control of speed (rpm) and torque, high efficiency and requires low maintenance. The use of an electric motor for operating the drive unit is further advantageous in that it may be used in combination with electric sensors for providing rapid and accurate adjustment of its parameters such as speed, torque, etc.

According to some embodiments of the present disclosure, the system may further comprise at least one of: a pressure sensor, an accelerometer, a gyroscope, configured to detect a movement of the vehicle body relative to the wheels of the vehicle. The at least one of a pressure sensor, an accelerometer, a gyroscope enable the acquisition of input indicative of a movement of the vehicle body relative to the wheels allowing the at least one hydraulic actuator to adjust the preload of selected hydraulic damper assemblies in order to compensate the movement of the vehicle body and stabilize the vehicle. For example, pressure sensors may be arranged between each of the at least one hydraulic actuator and each of the at least two hydraulic damper assemblies to which they are fluidly connected and may be configured to provide a pressure outputs to the respective drive units of each of the at least one hydraulic actuator. The pressure output being indicative of the movement of the vehicle body, for example when the pressure increases due to compression of a hydraulic damper assembly. In response to the pressure output, the drive unit may adjust the preload of the specific hydraulic damper assembly or assemblies to stabilize the vehicle body.

Accordingly, the method according the second aspect of the present disclosure may further embody the step of detecting a movement of the vehicle body relative to the wheels of the vehicle is performed by means of at least one of a pressure sensor, an accelerometer, a gyroscope.

According to some embodiments of the present disclosure, the at least one hydraulic actuator may comprise at least one pressure sensor configured to sense a pressure within at least one of the at least two fluid chambers. Furthermore, according to some embodiments, the at least one pressure sensor may be configured to communicate the pressure to the drive unit such that the drive unit is configured to actuate the at least one hydraulic actuator such that the preload of at least one of the hydraulic damping assemblies is adjusted. This is advantageous in that the at least one pressure sensor may, by evaluating the pressure in the at least one fluid chamber, determine the force output from the hydraulic actuator. Further, the at least one pressure sensor may be coupled to a control system for automatically controlling the drive unit to adjust at least one of the at least two actuator pistons. This is advantageous in that the preload of a hydraulic damper assembly may automatically be adjusted in response to the output of the at least one pressure sensor comprised in a hydraulic actuator fluidly connected to the hydraulic damper assembly. The provision of at least one pressure sensor comprised in the hydraulic actuator is further advantageous since it may be used for sensing pressure overload, which can be used for actuating a movement of the actuator piston to avoid damage of the hydraulic actuator or any related component or component connected therewith. It will be appreciated that other pressure sensors, accelerometers and/or gyroscopes, positioned elsewhere in the system may also be configured to communicate the pressure, speed, position to the drive unit such that the drive unit is configured to actuate the at least one hydraulic actuator such that the preload of at least one of the hydraulic damping assemblies is adjusted.

According to some embodiments of the present disclosure, the at least two hydraulic damper assemblies and the at least one hydraulic actuator may be configured to form a closed hydraulic system. As used herein, "closed hydraulic system" may be understood as a hydraulic system comprising a known and finite volume of hydraulic fluid. That is, in a closed hydraulic system the flow of hydraulic fluid is intermittent, i.e. a flow of hydraulic fluid is generated by the at least one hydraulic actuator when adjustment of preload is required and/or by the hydraulic damper assemblies during compression and rebound strokes. When the vehicle is immobile or stabilized, the flow of hydraulic fluid in the closed system is substantially null. The provision of a closed hydraulic system, particularly the finite volume of hydraulic fluid in the system, further enables a better control of the movement of the vehicle body relative to the wheels.

According to some embodiments of the present disclosure, a position of the at least two actuator pistons within respective fluid chambers of the at least one hydraulic actuator may directly control a position of the at least two actuator pistons within respective fluid chambers of the other ones of the at least one hydraulic actuator. Consequently to the provision of the closed hydraulic system, the position of the actuator pistons in the respective fluid chambers of the hydraulic actuator is indicative of the volume of hydraulic fluid remaining in the fluid chambers and therefore indicative of the volume of hydraulic fluid in the fluid chambers of the other hydraulic actuators connected in the system. In different words, the finite volume of hydraulic fluid in the system enables the determination of the position of the actuator pistons of all hydraulic actuators based on the position of the actuator pistons of one hydraulic actuator, thus permitting the control of all hydraulic actuators by varying the position of the actuator pistons of one hydraulic actuator.

According to some embodiments of the present disclosure, the position of the at least two actuator pistons within respective fluid chambers of the at least one hydraulic actuator may directly control the preloading of the at least two hydraulic damper assemblies. Similarly as described above, the provision of the closed hydraulic system enables the control of the preloading of the hydraulic damper assemblies connected in the system.

According to some embodiments of the present disclosure, each of the at least one hydraulic actuators may be separately controllable by means of their respective drive unit. That is, in addition to controlling each of the at least one hydraulic actuators by the position of the actuator pistons of one of the at least one hydraulic actuators, the system of the present disclosure also enables separate control of the hydraulic actuators by means of their respective drive unit. This improves the control of the adjustment of the preload resulting in a greater control of the movement of the vehicle body relative to the wheels of the vehicle.

According to some embodiments of the present disclosure, the system may comprise an auxiliary lifting assembly configured to adjust the preload of at least two of the hydraulic damper assemblies to control a lifting movement of the vehicle body relative to the wheels of the vehicle. As used herein, "lifting movement" may be understood as the vertical movement of the front of the vehicle or the rear of the vehicle relative to the front or rear wheels respectively. Furthermore, the auxiliary lifting assembly may comprise an auxiliary hydraulic actuator configured to be in fluid communication with at least two of the hydraulic damper assemblies. The auxiliary lifting assembly therefore enables additional stabilization of the vehicle body relative to the wheels complementing the control of the movement of the vehicle body performed by the at least one hydraulic actuator according to the first aspect. Additionally, and according to some embodiments of the present disclosure, the auxiliary lifting assembly may be fluidly separate from the closed hydraulic system formed by the at least one hydraulic actuator and the at least two hydraulic damper assembly. That is, the auxiliary lifting assembly does not interact hydraulically with the closed hydraulic system formed by the at least one hydraulic actuator and the at least two hydraulic damper assembly, which reduces the complexity of the system of the present disclosure as a whole and increases the control of the movement of the vehicle body. It will be appreciated that the auxiliary lifting system may also be a closed hydraulic system in itself, improving the control on the lifting movement of the vehicle body.

Accordingly, the method according the second aspect of the present disclosure may further embody the step of controlling the flow of damping fluid in the auxiliary lifting assembly to adjust the preload of at least two hydraulic damper assembly.

Further objectives of, features of, and advantages with the present disclosure will become apparent when studying the following detailed description, the drawings, and the appended claims. Those skilled in the art will realize that different features of the present disclosure can be combined to create embodiments other than those described in the following.

### BRIEF DESCRIPTION OF DRAWINGS

One or more embodiments will be described, by way of example only, and with reference to the following figures, in which:
Figure 1 schematically illustrates a cut-away view of the at least one hydraulic actuator according to some embodiments of the present disclosure, according to some embodiment of the present disclosure;
Figure 2a schematically illustrates a system for controlling the movement of a vehicle body according to some embodiments of the present disclosure;
Figure 2b schematically illustrates an alternative system for controlling the movement of a vehicle body relative to the wheels of the vehicle according to some embodiments of the present disclosure;
Figure 3 schematically illustrates an alternative system for controlling the movement of a vehicle body relative to the wheels of the vehicle according to some embodiment of the present disclosure;
Figure 4 schematically illustrates another alternative system for controlling the movement of a vehicle body relative to the wheels of the vehicle according to some embodiment of the present disclosure;
Figure 5 schematically illustrates another alternative system for controlling the movement of a vehicle body relative to the wheels of the vehicle according to some embodiment of the present disclosure.

### DETAILED DESCRIPTION

The present disclosure is described in the following by way of a number of illustrative examples. It will be appreciated that these examples are provided for illustration and explanation only and are not intended to be limiting on the scope of the disclosure.

Furthermore, although the examples may be presented in the form of individual embodiments, it will be recognized that the present disclosure also covers combinations of the embodiments described herein.

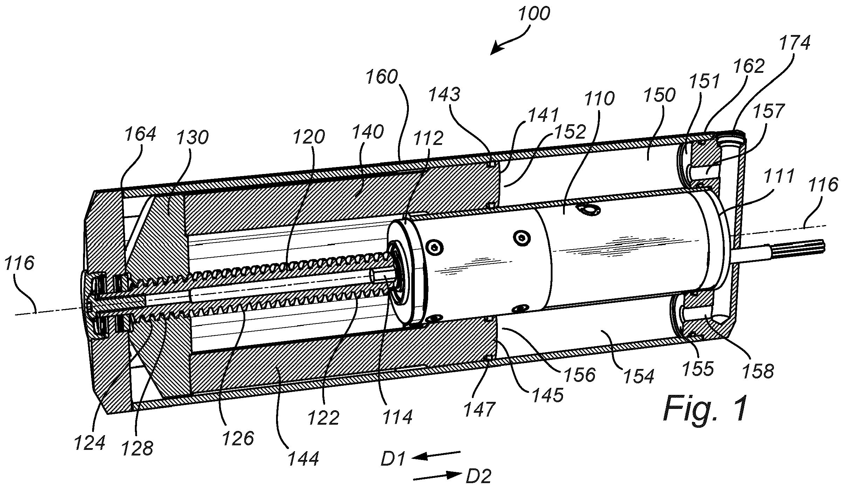

Figure 1 schematically illustrates a cut-away view of the at least one hydraulic actuator 100 according to some embodiments of the present disclosure. The hydraulic actuator 100 is shown in Figure 1 comprising a drive unit 110, a lead screw 120, a gear element 130, a first and a second actuator piston 140, 144, and a first and a second fluid chamber 150, 154. The drive unit 110 has a longitudinal extension along a center axis 116 of the drive unit 110. The drive unit 110 comprises a first end 111 and a second end 112, wherein the second end 112 is opposite the first end 111. The drive unit 110 is configured to provide a rotational force. The drive unit 110 may comprise an electric motor, which is able to convert electrical energy into mechanical energy. The electric motor may, for example, be an AC motor or a DC motor. The electric motor may be a brushless motor. Alternatively, the drive unit 110 may comprise a hydraulic motor. As referred to herein, a first direction D1 is defined as the direction from the first end 111 of the drive unit 110 towards the second end 112 of the drive unit 110. As referred to herein, a second direction D2 is defined as opposite to the first direction. The drive unit 110 is configured to, at its second end 112, provide a rotational force, which is rotational around the axis 116 of the drive unit 110. Still in reference to Figure 1, the drive unit 110 comprises a connecting portion 114 at its second end 112. The connecting portion 114 is connected to the lead screw 120 at a first lead screw end 122. The lead screw 120 has a longitudinal extension along the axis 116, from the first lead screw end 122 to a second lead screw end 124. Further, the lead screw 120 has an external thread 126, which may extend from the first lead screw end 122 to the second lead screw end 124. A longitudinal axis of the lead screw 120 is coaxial with the axis 116 of the drive unit 110. The lead screw 120 is, via the external thread 126, in a threaded connection 128 with the gear element 130. The gear element 130 is, in Figure 1, a lead screw nut 130 which is mounted at the lead screw 120 and, thus, in a threaded connection 128 therewith. The lead screw nut 130 has an internal thread which matches the external thread 126 of the lead screw 120. Figure 1 further illustrates each of the first and second fluid chamber 150, 154 positioned such that the respective first and second actuator piston 140, 144 is slidable therein. Each of the first and second fluid chambers 150, 154 extends longitudinally, in parallel with the axis 116, from a second end 152, 156, to a first end 151, 155 of the respective fluid chamber 150, 154. The longitudinal extension of the first and the second fluid chamber 150, 154 extends in parallel with the longitudinal extension of the drive unit 110, at opposite sides thereof. The first and second fluid chambers 150, 154 are shown in Figure 1 having a circular cross-section. It will be appreciated that providing the fluid chambers with a cross-section of another shape, in combination with first and second actuator pistons 140, 144 of a corresponding shape, is also conceivable within the concept of the present disclosure. Such a cross-sectional shape may be, but is not limited to, an ellipse, a square, a rectangle, etc. The first and second fluid chambers 150, 154 are arranged to receive and contain hydraulic fluid. Still with respect to Figure 1, each of the first ends 151, 155 of the first and second fluid chamber 150,154 comprises an aperture 157, 158. The function of the aperture 157, 158 is to enable hydraulic fluid to exit and enter the first and the second fluid chamber 150, 154 upon movement of a respective actuator piston 140, 144 therein. The first and second actuator piston 140, 144 are slidable inside the first and second fluid chamber 150, 154, respectively. Each of the first and second actuator piston 140, 144 is slidable in the first direction D1, for moving hydraulic fluid into the first and second fluid chamber 150, 154, via the aperture 157, 158, respectively. Each of the first and second actuator piston 140, 144 is further slidable in the second direction D2, for moving hydraulic fluid out of the first and second fluid chamber 150, 154, via the aperture 157, 158, respectively. The first and second actuator pistons 140, 144 may be any standard piston used for moving hydraulic fluid. In Figure 1, each of the first and second actuator piston 140, 144 further comprises an O-ring 143, 147 arranged around a circumference of the first end 141, 145 of the respective actuator piston 140, 144, for sealing purposes.

The drive unit 110 of Figure 1 is configured to provide a rotational force for rotating the lead screw 120, via the connecting portion 114, in a first rotational direction around the axis 116. When the lead screw 120 rotates in the first rotational direction around the axis 116, the external thread 126 will then, via the threaded connection 128, induce a linear motion of the gear element 130 in the first direction D1. Since the gear element 130 is connected to the first and second actuator pistons 140, 144, the linear motion of the gear element 130 in the first direction D1 causes each of the first and second actuator piston 140, 144 to slide in the first direction D1 within the respective first and the second fluid chamber 150, 154, for moving hydraulic fluid into the first and second fluid chambers 150, 154, via the respective aperture 157, 158. Similarly, the drive unit 110 is further configured to provide a rotational force in a second rotational direction for rotating the lead screw 120, via the connecting portion 114, around the axis 116. The external thread 126 of the lead screw 120 will then, via the threaded connection 128, induce a linear motion of the gear element 130 in the second direction D2. The gear element 130 will thereby cause each of the first and the second actuator piston 140, 144 to slide in the second direction D2 within the respective fluid chamber 150, 154 for moving hydraulic fluid out of the first and second fluid chambers 150, 154, via the respective aperture 157, 158. Figure 1 further illustrates the hydraulic actuator 100 comprising a housing 160 for housing the drive unit 110, the first and second actuator pistons 140, 144 and the first and second fluid chambers 150, 154. The housing 160 has a longitudinal extension along the axis 116 from a first housing end 162 to a second housing end 164.

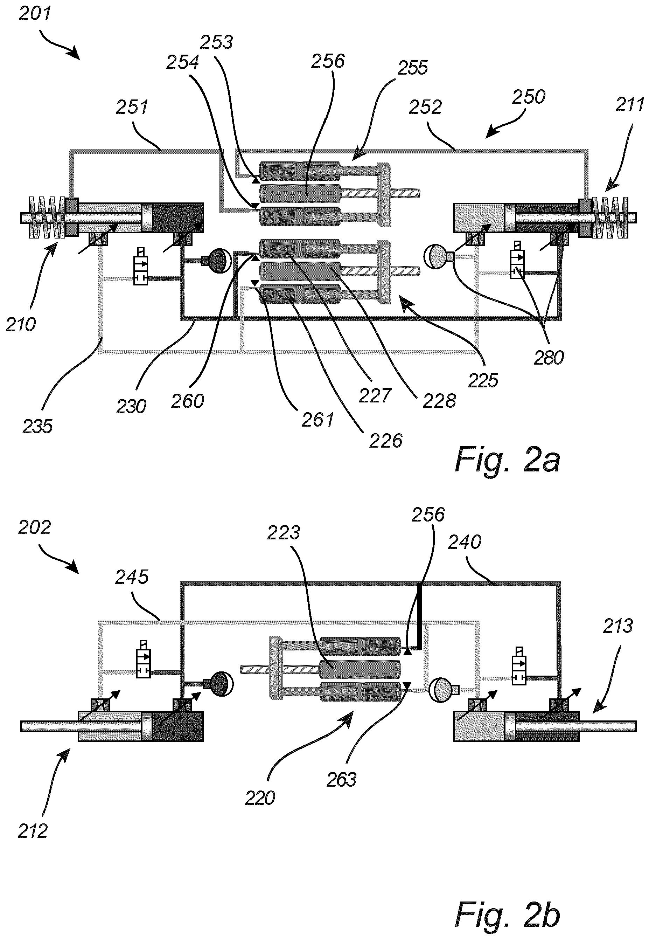

Figure 2a schematically illustrates a system 201 for controlling the movement of a vehicle body according to some embodiments of the present disclosure. The system 201 is shown comprising first hydraulic damper assembly 210 and a second hydraulic damper assembly 211 configured to connect the vehicle body (not shown) to respective wheels of the vehicle (not shown). The first hydraulic damper assembly 210 is exemplified in Figure 2a as the front left hydraulic damper assembly connecting the front left wheel to the vehicle body. Similarly, the second hydraulic damper assembly 211 is exemplified in Figure 2a as the front right hydraulic damper assembly connecting the front right wheel to the vehicle body. System 201 is further shown comprising an hydraulic actuator 225 in fluid communication with both the first hydraulic damper assembly 210 and the second hydraulic damper assembly 211. That is, the hydraulic actuator 225 is shown comprising two fluid chambers 226, 227 each comprising actuator pistons configured to be actuated by a drive unit 228 such that a flow of hydraulic fluid may be generated to and from the first and second hydraulic damper assemblies 210, 211 via hydraulic line 230. The hydraulic actuator 225 of Figure 2a is therefore shown configured to adjust the preload of the first and second hydraulic damper assemblies 210, 211 to control at least one of the pitching movement of the vehicle body relative to the front left and front right wheels of the vehicle; and a rolling movement of the vehicle body relative to the front left and front right wheels of the vehicle. Figure 2a further illustrates the first hydraulic damper assembly 210 in fluid communication with the second hydraulic damper assembly 211 via hydraulic line 235 and via hydraulic line 230. The fluid communication between the first hydraulic damper assembly 210 and the second hydraulic damper assembly 211 further improves the control of the movement of the vehicle body relative to the wheels by enabling transfer of hydraulic fluid between the first and second hydraulic damper assemblies 210, 211. Figure 2a further illustrates a first pressure sensor 260 configured to measure hydraulic pressure variation in hydraulic fluid line 230. Similarly, Figure 2a illustrates a second pressure sensor 261 configured to measure hydraulic pressure variation in hydraulic fluid line 235.lt will be appreciated that the first and second pressure sensors 260, 261 may alternatively be comprised in the fluid chambers 227, 226 respectively. The first and second pressure sensors 260, 261 are configured to communicate pressure outputs to the drive unit 228 of the hydraulic actuator 225, for example by means of a communication unit or a control unit (not shown), such that the drive unit 228 may actuate the hydraulic actuator 225 such that the preload of the first and second hydraulic damping assemblies 210, 211 is adjusted. It will be appreciated that the system 201 forms a closed hydraulic system comprising a finite volume of hydraulic fluid requiring no input of hydraulic fluid for functioning.

Figure 2a further illustrates the system 201 comprising an auxiliary lifting assembly 250 configured to adjust the preload of the first and second hydraulic damper assemblies 210, 211 to control a lifting movement of the vehicle body relative to the front wheels of the vehicle. The auxiliary lifting assembly of Figure 2a is shown comprising an auxiliary hydraulic actuator 255 in fluid communication with the first hydraulic damper assembly via hydraulic fluid line 251 and in fluid communication with the second hydraulic damper assembly 211 via hydraulic fluid line 252. The auxiliary lifting assembly 250 is shown in Figure 2a hydraulically separated from the rest of the system 201, that is fluidly separate from the hydraulic actuators 225 and its fluid communication with the first and second hydraulic damper assemblies 210, 211. The auxiliary lifting assembly 250 is further shown comprising a first auxiliary pressure sensor 253 configured to measure hydraulic pressure variation in hydraulic fluid line 252. Similarly, Figure 2a illustrates a second auxiliary pressure sensor 254 configured to measure hydraulic pressure variation in hydraulic fluid line 251. It will be appreciated that the first and second auxiliary pressure sensors 253, 254 may alternatively be comprised in the fluid chambers of the auxiliary hydraulic actuator 255. The first and second auxiliary pressure sensors 253, 254 are configured to communicate pressure outputs to the auxiliary drive unit 256 of the auxiliary hydraulic actuator 255, for example by means of a communication unit or control unit (not shown), such that the auxiliary drive unit 256 may actuate the auxiliary hydraulic actuator255 such that the preload of the first and second hydraulic damping assemblies 210, 211 is adjusted. The auxiliary lifting assembly 250 therefore enables multistage lifting of the vehicle body. That is, the auxiliary lifting assembly 250 permits an additional stabilization of the vehicle body relative to the wheels of the vehicle for lifting movements of the vehicle body relative to the wheels.

Figure 2b schematically illustrates an alternative system 202 for controlling the movement of a vehicle body relative to the wheels of the vehicle according to some embodiments of the present disclosure. The system 202 of Figure 2b is characterized similarly as the system 201 depicted in Figure 2a but operating on the rear wheels (not shown) of the vehicle. That is, the system 202 is shown comprising a third hydraulic damper assembly 212 and a fourth hydraulic damper assembly 213. The third hydraulic damper assembly 212 is exemplified in Figure 2b as the rear left hydraulic damper assembly connecting the rear left wheel to the vehicle body (not shown). Similarly, the fourth hydraulic damper assembly 213 is exemplified in Figure 2b as the rear right hydraulic damper assembly connecting the rear right wheel to the vehicle body. System 202 is further shown comprising an hydraulic actuator 220 in fluid communication with both the third hydraulic damper assembly 212 and the fourth hydraulic damper assembly 213. It will be appreciated that the hydraulic actuator 220 is characterized similarly as the hydraulic actuator 225 depicted in Figure 2a. Figure 2b further illustrates the third hydraulic damper assembly 212 in fluid communication with the fourth hydraulic damper assembly 213 via hydraulic line 240 and via hydraulic line 245. The system 202 of figure 2b is also shown comprising a third pressure sensor 262 and a fourth pressure sensor 263 configured to measure pressure variation in hydraulic fluid lines 240 and 245 respectively and communicate the pressure outputs to the drive unit 223 of the hydraulic actuator 220 such that the drive unit 223 may actuate the hydraulic actuator such that the preload of the third and fourth hydraulic damping assemblies212, 213 is adjusted. It will be appreciated that the system 202 also forms a closed hydraulic system comprising a finite volume of hydraulic fluid requiring no input of hydraulic fluid for functioning.

The system 201 of Figure 2a and the system 202 of Figure 2b may further be implemented on the same vehicle and configured to operate complementarily. That is, the system 201 may be implemented to control at least one of the pitching movement of the vehicle body relative to the front wheels of the vehicle and the rolling movement of the vehicle body relative to the front wheels of the vehicle, and the system 202 of Figure 2b may be implemented to control at least one of the pitching movement of the vehicle body relative to the rear wheels of the vehicle and the rolling movement of the vehicle body relative to the rear wheels of the vehicle.

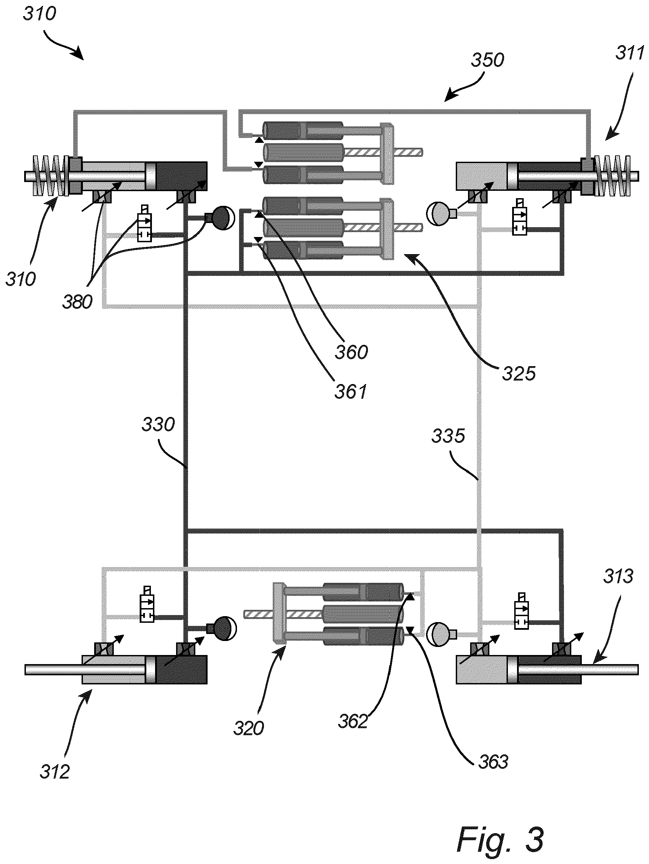

Figure 3 schematically illustrates an alternative system 300 for controlling the movement of a vehicle body (not shown) relative to the wheels (not shown) of the vehicle according to some embodiment of the present disclosure. The system 300 is characterized similarly as the combination of the systems 201 and 202 of Figures 2a and Figure 2b with the addition that it comprises fluid communication between the front and rear wheels to form a closed hydraulic system 300. In different words, the system 300 comprises a first hydraulic damper assembly 310 connecting the vehicle body to the front left wheel of the vehicle, a second hydraulic damper assembly 311 connecting the vehicle body to the front right wheel, a third hydraulic damper assembly 312 connecting the vehicle body to the rear left wheel and a fourth hydraulic damper assembly 313 connecting the vehicle body to the rear right wheel. Figure 3 further illustrates a first hydraulic actuator 325 in fluid communication with the first, second, third and fourth hydraulic damper assemblies 310, 311, 312, 313 via hydraulic fluid line 330. Similarly, Figure 3 illustrates a second hydraulic actuator 320 in fluid communication with the first, second, third and fourth hydraulic damper assemblies 310, 311, 312, 313 via hydraulic fluid line 335. The system 300 further depicts a fluid communication between the first, second, third and fourth hydraulic damper assemblies 310, 311, 312, 313 via hydraulic fluid lines 330 and 335. The hydraulic damper assemblies 310, 311, 312, 313, and the hydraulic actuators 320, 325 therefore form a closed hydraulic system wherein the position of the actuator pistons within respective fluid chambers of one the first or second hydraulic actuator 320, 325 directly controls the position of the two actuator pistons within respective fluid chambers of the other one of the first or second hydraulic actuator 320, 325. That is, the preload of each hydraulic damper assemblies 310, 311, 312, 313 may be adjusted by controlling, for example, the first hydraulic actuator 325 only. It will be appreciated that the first and second hydraulic actuators 325, 320 may also be controlled separately by means of their respective drive units. The system 300 of Figure 3 also comprises pressure sensors 360, 361, 362, 363 configured to measure pressure variation in the hydraulic fluid lines 330 and 335 and communicate pressure outputs to the drive unit of the first hydraulic actuator 325 and/or the second hydraulic actuator 320 such that the respective drive units may actuate the first and/or second hydraulic actuators 325, 320, for adjusting the preload the first, second, third and fourth hydraulic damper assemblies 310, 311, 312, 313. The system 300 therefore controls at least one of the pitching movement and the rolling movement of the vehicle body relative to the wheels of the vehicle by detecting a movement of the vehicle body relative to the wheels of the vehicle by means of at least one of the pressure sensors 360, 361, 362, 363 and controlling a flow of hydraulic fluid in the system 300 to adjust the preload of the hydraulic damper assemblies 310, 311, 312, 313. It will be appreciated that, for a rolling movement of the vehicle body, the system 300 is configured to increase a damping pressure in the first and third hydraulic damper assemblies 310, 312 positioned on the left side of the vehicle or the second and fourth hydraulic damper assemblies 311, 313 positioned on the right side of the vehicle by actuating at least one of hydraulic actuators 325 and 320. The system 300 of Figure 3 is further shown comprising an auxiliary lifting system 350 characterized identically as the auxiliary lifting system 250 shown in Figure 2a.

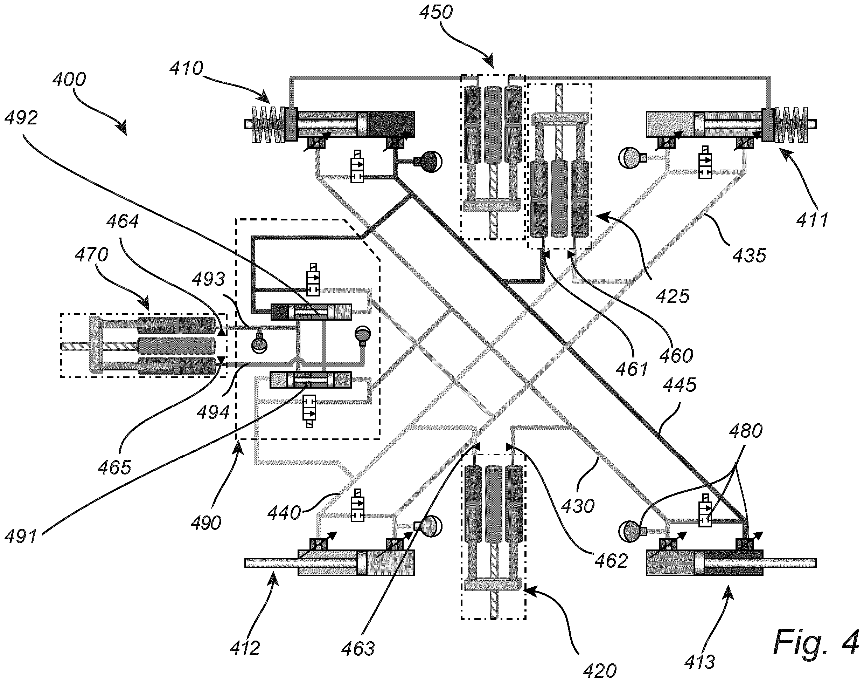

Figure 4 schematically illustrates yet another alternative system 400 for controlling the movement of a vehicle body (not shown) relative to the wheels (not shown) of the vehicle according to some embodiment of the present disclosure. The system 400 comprises a first hydraulic damper assembly 410 connecting the vehicle body to the front left wheel of the vehicle, a second hydraulic damper assembly 411 connecting the vehicle body to the front right wheel, a third hydraulic damper assembly 412 connecting the vehicle body to the rear left wheel and a fourth hydraulic damper assembly 413 connecting the vehicle body to the rear right wheel. Figure 4 further illustrates a first hydraulic actuator 425 in fluid communication with the first, second, third and fourth hydraulic damper assemblies 410, 411, 412, 413 via hydraulic fluid lines 435 and 445. Similarly, Figure 4 illustrates a second hydraulic actuator 420 in fluid communication with the first, second, third and fourth hydraulic damper assemblies 410, 411, 412, 413 via hydraulic fluid lines 430 and 440. The system 400 further comprises a fluid communication between the first, second, third and fourth hydraulic damper assemblies 410, 411, 412, 413 via hydraulic fluid lines 430, 440, 435 and 445. The system 400 is further shown comprising a third hydraulic actuator 470 in fluid communication with each hydraulic damper assembly 410, 411, 412, 413 and with the first and second hydraulic actuators 425, 420 via a manifold 490. The manifold 490 may be configured to direct hydraulic fluid to the hydraulic damper assemblies 410, 411, 412, 413 and to the first and second hydraulic actuators 425, 420 by means of a first bi-directional piston assembly 492 and a second bi-directional piston assembly 491. Figure 4 further illustrates the third hydraulic actuator 470 in fluid communication with the manifold 490 via hydraulic fluid lines 493 and 494. The hydraulic damper assemblies 410, 411, 412, 413 and the hydraulic actuators 425, 420, 470 therefore form a closed hydraulic system wherein the position of the actuator pistons within respective fluid chambers of one of the first, second or third hydraulic actuator 425, 420, 470 directly controls the position of the two actuator pistons within respective fluid chambers of the other ones of the first, second and third hydraulic actuator 425, 420, 470. That is, the preload of each hydraulic damper assemblies 410, 411, 412, 413 may be adjusted by controlling, for example, the third hydraulic actuator 470 only. It will be appreciated that the first and second hydraulic actuators 425, 420 may also be controlled separately by means of their respective drive units. It will further be appreciated that the third hydraulic actuator 470 and the manifold 490 enable improvement of the control of the system 400 of the movement of the vehicle body relative to the wheels. It will further be appreciated that the system 400 of Figure 4 comprises pressure sensors 460, 461, 462, 463, 464, 465 configured to measure pressure variation in the hydraulic fluid lines 435, 445, 430, 440, 493 and 494 and communicate pressure outputs to the drive unit of the first hydraulic actuator 425, the second hydraulic actuator 420 and the third hydraulic actuator 470 such that the respective drive units may actuate the first hydraulic actuator 425, the second hydraulic actuator 420 and the third hydraulic actuator 470, for adjusting the preload the first, second, third and fourth hydraulic damper assemblies 410, 411, 412, 413. The system 400 therefore controls at least one of the pitching movement and the rolling movement of the vehicle body relative to the wheels of the vehicle by detecting a movement of the vehicle body relative to the wheels of the vehicle by means of at least one of the pressure sensors 460, 461, 462, 463, 464, 465, and controlling a flow of hydraulic fluid in the system 400 to adjust the preload of the hydraulic damper assemblies 410, 411, 412, 413. It will be appreciated that, for a rolling movement of the vehicle body, the system 400 is configured to increase a damping pressure in the first and third hydraulic damper assemblies 410, 412 positioned on the left side of the vehicle or the second and fourth hydraulic damper assemblies 411, 413 positioned on the right side of the vehicle by actuating at least one of hydraulic actuators 425, 420, 470. It will further be appreciated that, for a pitching movement of the vehicle body, the system 400 is configured to increase a damping pressure in the first and second hydraulic damper assemblies 410, 411 positioned at the front of the vehicle or the third and fourth hydraulic damper assemblies 412, 413 positioned at the rear of the vehicle by actuating at least one of hydraulic actuators 425, 420, 470. The system 400 of Figure 4 is further shown comprising an auxiliary lifting system 450 characterized identically as the auxiliary lifting system 250 shown in Figure 2a.

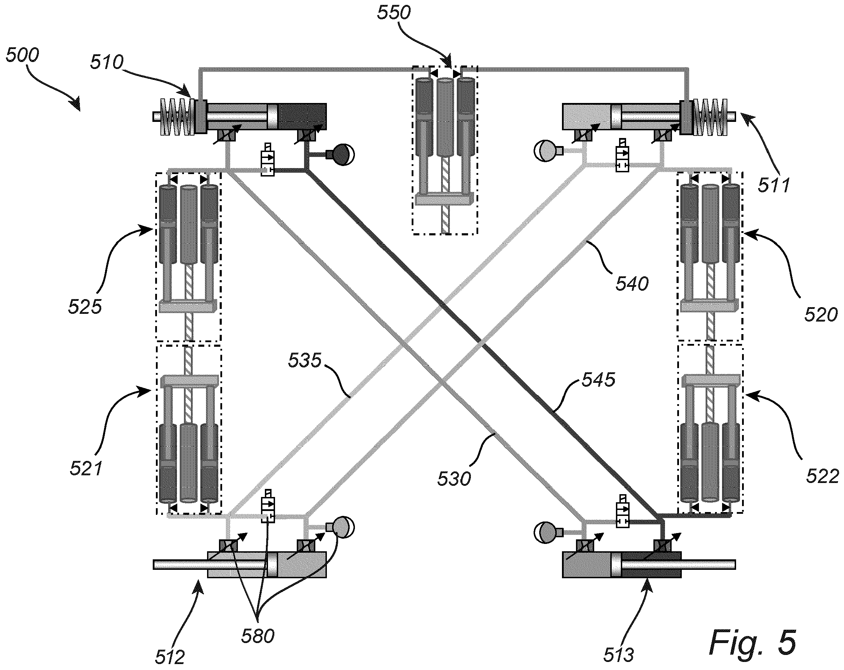

Figure 5 schematically illustrates yet another alternative system 500 for controlling the movement of a vehicle body (not shown) relative to the wheels (not shown) of the vehicle according to some embodiment of the present disclosure. The system 500 comprises a first hydraulic damper assembly 510 connecting the vehicle body to the front left wheel of the vehicle, a second hydraulic damper assembly 511 connecting the vehicle body to the front right wheel, a third hydraulic damper assembly 512 connecting the vehicle body to the rear left wheel and a fourth hydraulic damper assembly 513 connecting the vehicle body to the rear right wheel. Figure 5 further illustrates a first hydraulic actuator 525 and a fourth hydraulic actuator 522 in fluid communication with the first and fourth hydraulic damper assemblies 510, 513 via hydraulic fluid line 530 and 545 respectively. Similarly, Figure 5 illustrates a second hydraulic actuator 520 and a third hydraulic actuator 521 in fluid communication with the second and third hydraulic damper assemblies 511, 512 via hydraulic fluid lines 540 and 535. The system 500 further comprises a fluid communication between the first and fourth hydraulic damper assemblies 510, 513 via hydraulic fluid lines 530 and 545. Similarly, the system 500 comprises a fluid communication between the second and third hydraulic damper assemblies 511, 512 via hydraulic fluid lines 540 and 535. Figure 5 further illustrates the first hydraulic actuator 525 configured to be connected to the third hydraulic actuator 521 such that the actuation of one of the first or third hydraulic actuator 525, 521 actuates the other one of the first or third hydraulic actuator 525, 521. That is, the displacement of the actuator pistons in the respective fluid chambers of one of the first or third hydraulic actuator 525, 521 generates a displacement of the actuator pistons in the respective fluid chambers of the other one of the first or third hydraulic actuator 525, 521. This generated displacement may be the same for both hydraulic actuator 525, 521 or may be a fraction of the displacement. Similarly, Figure 5 illustrates the second hydraulic actuator 520 configured to be connected to the fourth hydraulic actuator 522 such that the actuation of one of the second or fourth hydraulic actuator 520, 522 actuates the other one of the second or fourth hydraulic actuator 520, 522. That is, the displacement of the actuator pistons in the respective fluid chambers of one of the second or fourth hydraulic actuator 520, 522 generates a displacement of the actuator pistons in the respective fluid chambers of the other one of the second or fourth hydraulic actuator 520, 522. The connection between the first and third hydraulic actuators 525, 521, and the connection between the second and fourth hydraulic actuators 520, 522 therefore enable a combined control of the rolling movement and the pitching movement of the vehicle body relative to the wheels of the vehicle. It will be appreciated that the system 500 comprises pressure sensors characterized similarly as the pressure sensors described in Figures 2-4 providing pressure output in response to which the hydraulic actuators 525, 520, 521 and 522 are configured to be actuated to adjust the preload of the hydraulic damper assemblies 510, 511, 512, 513. It will further be appreciated that the system 500 of Figure 5 comprises an auxiliary lifting system 550 characterized identically as the auxiliary lifting system 250 shown in Figure 2a.

The alternative systems 201, 202, 300, 400 and 500 for controlling the movement of the vehicle body relative to the wheels of the vehicle shown in the above defined Figures may also comprise additional hydraulic components. For example, the systems 201, 202, 300, 400 and 500 are shown in their respective Figures comprising hydraulic fluid accumulators, additional system valves and hydraulic flow meters 280, 380, 480, 580, enabling the improvement of the control of movement of the vehicle body relative to the wheels of the vehicle. For instance, the hydraulic fluid accumulators, additional system valves and hydraulic flow meters 280, 380, 480, 580 may be configured to reduce pressure peaks, vibration and/or pulsations in the hydraulic fluid lines resulting improving the performance of the systems 201, 202, 300, 400 and 500. Furthermore, as demonstrated by the various alternative systems illustrates in Figures 2 to 5, the system for controlling the movement of the vehicle body relative to the wheels of the vehicle according to the present disclosure represents a scalable design adaptable to various configurations.

It will be appreciated that, although the above aspects are presented separately, they may be combined in any suitable manner such that a casing may benefit from all of the advantages provided by respective aspects of the present disclosure.

Furthermore, whilst the forgoing description and the appended drawings are provided as exemplary or preferred realizations of the disclosed aspects, it will be appreciated that the disclosed aspects need not be limited to the exact form shown and/or described.

### ITEMIZED LIST OF EMBODIMENTS

1. A system for use in a vehicle to control movement of a vehicle body relative to each wheel of the vehicle, the system comprising:
   at least two hydraulic damper assemblies each configured to connect the vehicle body to a respective wheel of the vehicle;
   at least one hydraulic actuator configured to be in fluid communication with at least two of the hydraulic damper assemblies;

   wherein the at least one hydraulic actuator comprises at least two fluid chambers, each comprising an aperture at a first end thereof, and at least two actuator pistons, each slidable within respective fluid chambers in a first direction thereof for moving hydraulic fluid into the fluid chamber via the aperture and in a second direction for moving hydraulic fluid out of the fluid chamber via the aperture;
   wherein each of the at least one actuator pistons is operatively connected to a drive unit, the drive unit being configured to generate a translation of the at least one actuator pistons in the first and second direction; and
   wherein the at least one hydraulic actuator is configured to adjust a preload of the at least two hydraulic damper assemblies to control at least one of:
      a pitching movement of the vehicle body relative to the wheels of the vehicle; and
      a rolling movement of the vehicle body relative to the wheels of the vehicle.
2. The system according to item 1, wherein the drive unit is arranged to provide power transmission via an axis of the drive unit, wherein the translation of the at least two actuator pistons is generated by the power transmission in a direction of the axis.
3. The system according to item 2, wherein the drive unit comprises a longitudinal extension along the axis, wherein each of the at least two fluid chambers comprise a longitudinal extension parallel to the longitudinal extension of the drive unit.
4. The system according to item 2, wherein the at least one hydraulic actuator further comprises a lead screw operatively connected to the drive unit and extending therefrom along the axis, such that when the drive unit is operated the lead screw is rotated, thereby transmitting power from the drive unit along the axis.
5. The system according to item 4, wherein the at least one hydraulic actuator further comprises a gear element in connection with the lead screw, wherein the gear element is engaged with the actuator piston, such that rotation of the lead screw generates a linear or a rotational motion of the gear element which, in turn, generates the translation of the actuator piston.
6. The system according to item 1, wherein the at least one hydraulic actuator further comprises an electric motor configured to operate the drive unit.
7. The system according to any of the preceding items, further comprising at least one of: a pressure sensor, an accelerometer, a gyroscope, configured to detect a movement of the vehicle body relative to the wheels of the vehicle.
8. The system according to item 1, wherein the at least one hydraulic actuator further comprises at least one pressure sensor configured to sense a pressure within at least one of the at least two fluid chambers.
9. The system according to item 8, wherein the at least one pressure sensor is configured to communicate the pressure to the drive unit such that the drive unit is configured to actuate the at least one hydraulic actuator such that the preload of at least one of the hydraulic damping assemblies is adjusted.
10. The system according to any of the preceding items, wherein the at least two hydraulic damper assemblies and the at least one hydraulic actuator are configured to form a closed hydraulic system.
11. The system according to item 10, wherein a position of the at least two actuator pistons within respective fluid chambers of the at least one hydraulic actuator directly controls a position of the at least two actuator pistons within respective fluid chambers of the other ones of the at least one hydraulic actuator.
12. The system according to item 11, wherein the position of the at least two actuator pistons within respective fluid chambers of the at least one hydraulic actuator directly controls the preloading of the at least two hydraulic damper assemblies.
13. The system according to any of the preceding items, wherein each of the at least one hydraulic actuators are separately controllable by means of their respective drive unit.
14. The system according to item 1, further comprising an auxiliary lifting assembly configured to adjust the preload of at least two of the hydraulic damper assemblies to control a lifting movement of the vehicle body relative to the wheels of the vehicle.
15. The system according to item 14, wherein the auxiliary lifting assembly comprises an auxiliary hydraulic actuator configured to be in fluid communication with at least two of the hydraulic damper assemblies.
16. The system according to item 15, wherein the auxiliary lifting assembly is fluidly separate from the closed hydraulic system formed by at least one hydraulic actuator and the at least two hydraulic damper assemblies.
17. A method for controlling movement of a vehicle body relative to each wheel of the vehicle using the system according to items 1-16, the method comprising:
   detecting a movement of the vehicle body relative to the wheels of the vehicle, wherein the movement of the vehicle body is at least one of a pitching movement or a rolling movement;
   controlling a flow of damping fluid in the system to adjust the preload of the at least two hydraulic damper assemblies;

   wherein, for a rolling movement of the vehicle body, increasing a damping pressure in at least two hydraulic damper assemblies positioned on a same side of the vehicle body by actuating at least one of the at least one hydraulic actuator; and
   wherein, for a pitching movement of the vehicle body, increasing a damping pressure in at least two hydraulic damper assemblies positioned at the front or at the rear of the vehicle body by actuating at least one of the at least one hydraulic actuator.
18. The method according to item 17, wherein the step of detecting a movement of the vehicle body relative to the wheels of the vehicle is performed by means of at least one of a pressure sensor, an accelerometer, a gyroscope.
19. The method according to any of items 17 to 18, further comprising the step of:
   controlling the flow of damping fluid in the auxiliary lifting assembly to adjust the preload of at least two hydraulic damper assembly.

## Claims

1. A system (201, 202, 300, 400, 500) for use in a vehicle to control movement of a vehicle body relative to each wheel of the vehicle, the system comprising:
at least two hydraulic damper assemblies (210, 211, 310, 311, 410, 411, 510, 511) each configured to connect the vehicle body to a respective wheel of the vehicle;
at least one hydraulic actuator (100, 225, 325, 425, 525) configured to be in fluid communication with at least two of the hydraulic damper assemblies;
wherein the at least one hydraulic actuator comprises at least two fluid chambers (150, 154), each comprising an aperture (157, 158) at a first end thereof, and at least two actuator pistons (140, 144), each slidable within respective fluid chambers in a first direction (D1) thereof for moving hydraulic fluid into the fluid chamber via the aperture and in a second direction (D2) for moving hydraulic fluid out of the fluid chamber via the aperture;
wherein each of the at least one actuator pistons is operatively connected to a drive unit (110, 228), the drive unit being configured to generate a translation of the at least one actuator pistons in the first and second direction; and
wherein the at least one hydraulic actuator is configured to adjust a preload of the at least two hydraulic damper assemblies to control at least one of:
a pitching movement of the vehicle body relative to the wheels of the vehicle; and
a rolling movement of the vehicle body relative to the wheels of the vehicle.

2. The system according to claim 1, wherein the drive unit is arranged to provide power transmission via an axis (116) of the drive unit, wherein the translation of the at least two actuator pistons is generated by the power transmission in a direction of the axis.

3. The system according to claim 2, wherein the at least one hydraulic actuator further comprises a lead screw (120) operatively connected to the drive unit and extending therefrom along the axis, such that when the drive unit is operated the lead screw is rotated, thereby transmitting power from the drive unit along the axis, and wherein the at least one hydraulic actuator further comprises a gear element (130) in connection with the lead screw, wherein the gear element is engaged with the actuator piston, such that rotation of the lead screw generates a linear or a rotational motion of the gear element which, in turn, generates the translation of the actuator piston.

4. The system according to any of the preceding claims, further comprising at least one of: a pressure sensor (260, 261, 360, 361, 460, 461) an accelerometer, a gyroscope, configured to detect a movement of the vehicle body relative to the wheels of the vehicle.

5. The system according to claim 1, wherein the at least one hydraulic actuator further comprises at least one pressure sensor configured to sense a pressure within at least one of the at least two fluid chambers.

6. The system according to claim 5, wherein the at least one pressure sensor is configured to communicate the pressure to the drive unit such that the drive unit is configured to actuate the at least one hydraulic actuator such that the preload of at least one of the hydraulic damping assemblies is adjusted.

7. The system according to any of the preceding claims, wherein the at least two hydraulic damper assemblies and the at least one hydraulic actuator are configured to form a closed hydraulic system.

8. The system according to claim 7, wherein a position of the at least two actuator pistons within respective fluid chambers of the at least one hydraulic actuator directly controls a position of the at least two actuator pistons within respective fluid chambers of the other ones of the at least one hydraulic actuator.

9. The system according to claim 8, wherein the position of the at least two actuator pistons within respective fluid chambers of the at least one hydraulic actuator directly controls the preloading of the at least two hydraulic damper assemblies.

10. The system according to any of the preceding claims, wherein each of the at least one hydraulic actuators are separately controllable by means of their respective drive unit.

11. The system according to claim 1, further comprising an auxiliary lifting assembly (250, 350, 450, 550) configured to adjust the preload of at least two of the hydraulic damper assemblies to control a lifting movement of the vehicle body relative to the wheels of the vehicle.

12. The system according to claim 11, wherein the auxiliary lifting assembly comprises an auxiliary hydraulic actuator (255) configured to be in fluid communication with at least two of the hydraulic damper assemblies and wherein the auxiliary lifting assembly is fluidly separate from the closed hydraulic system formed by the at least one hydraulic actuator and the at least two hydraulic damper assembly.

13. A method for controlling movement of a vehicle body relative to each wheel of the vehicle using the system according to claims 1-12, the method comprising:
detecting a movement of the vehicle body relative to the wheels of the vehicle, wherein the movement of the vehicle body is at least one of a pitching movement or a rolling movement;
controlling a flow of damping fluid in the system to adjust the preload of the at least two hydraulic damper assemblies;
wherein, for a rolling movement of the vehicle body, increasing a damping pressure in at least two hydraulic damper assemblies positioned on a same side of the vehicle body by actuating at least one of the at least one hydraulic actuator; and
wherein, for a pitching movement of the vehicle body, increasing a damping pressure in at least two hydraulic damper assemblies positioned at the front or at the rear of the vehicle body by actuating at least one of the at least one hydraulic actuator.

14. The method according to claim 13, wherein the step of detecting a movement of the vehicle body relative to the wheels of the vehicle is performed by means of at least one of a pressure sensor, an accelerometer, a gyroscope.

15. The method according to any of claims 13 to 14, further comprising the step of:
controlling the flow of damping fluid in the auxiliary lifting assembly to adjust the preload of at least two hydraulic damper assembly.
